(19) Europäisches Patentamt
European Patent Office
Office européen des brevets

(11) Veröffentlichungsnummer: **0 406 538 B1**

(12) # EUROPÄISCHE PATENTSCHRIFT

(45) Veröffentlichungstag der Patentschrift: **05.01.94**

(51) Int. Cl.[5]: **C08G 69/34**, C09D 11/10

(21) Anmeldenummer: **90108611.6**

(22) Anmeldetag: **08.05.90**

(54) **Polyamidharze auf Basis dimerisierter Fettsäuren, Verfahren zu ihrer Herstellung und Verfahren zur Herstellung von Druckfarben unter Mitverwendung der Polyamidharze.**

(30) Priorität: **06.06.89 DE 3918368**

(43) Veröffentlichungstag der Anmeldung:
**09.01.91 Patentblatt 91/02**

(45) Bekanntmachung des Hinweises auf die Patenterteilung:
**05.01.94 Patentblatt 94/01**

(84) Benannte Vertragsstaaten:
**DE ES FR GB GR IT**

(56) Entgegenhaltungen:

**CHEMICAL ABSTRACTS, Band 95, Nr. 4, 27. Juli 1981, Seite 85, Zusammenfassung Nr. 26778w, Columbus, Ohio, US; & JP-A-81 10 528**

(73) Patentinhaber: **Witco GmbH**
**Ernst-Schering-Strasse 14,**
**Postfach 1620**
**D-59180 Bergkamen(DE)**

(72) Erfinder: **Drawert, Manfred, Dr.**
**Alte Kreisstrasse 13**
**D-5758 Fröndenberg(DE)**
Erfinder: **Krase, Horst**
**Unterster Kamp 14**
**D-4700 Hamm 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.9/3.3.3)

## Beschreibung

Die Erfindung betrifft Polyamidharze, welche erhältlich sind durch Reaktion von dimerisierten Fettsäuren, monomeren Fettsäuren, Ethylendiamin und freie Aminogruppen enthaltende Addukten aus Glycidylethern und mindestens einer Aminkomponente, Verfahren zur Herstellung der Polyamidharze, ein Verfahren zur Herstellung von Druckfarben unter Mitverwendung der Polyamidharze und die Verwendung der Druckfarben zum Bedrucken von Substraten in Tief- oder Flexodruckverfahren.

Bei der Herstellung von Druckfarben werden von der Druckfarbenindustrie für die Bedruckung von Lebensmittelverpackungen neben der erforderlichen Beständigkeit des Druckfilms gegenüber Wasser und Chemikalien sowie einer guten Löslichkeit des Druckfarbenbindemittels bei Raumtemperatur in steigendem Maße auch verbesserte Gelierungsbeständigkeiten bei Temperaturen von ca. 0 °C und darunter gefordert und schnelles Wiederauftauvermögen bei Raumtemperatur, wobei gleichzeitig ein möglichst hoher Blockpunkt gegeben sein muß.

Druckfarben auf Basis von Polyamiden für den Tief- und Flexodruck, welche überwiegend für die Bedruckung von Lebensmittelverpackungen eingesetzt werden, sind bereits bekannt.

Diese Polyamidharze, welche durch Kondensation aus dimeren Fettsäuren und Diaminen, gegebenenfalls unter Mitverwendung von Kettenabbrechern hergestellt werden, weisen eine gute Flexibilität, Adhäsion auf den üblichen Substraten und hohen Glanz auf.

Nachteilig ist jedoch, daß ihre Lösungen bereits relativ dicht unterhalb der Raumtemperatur ganz oder teilweise gelieren.

Das führt dazu, daß bei Transport oder Lagerung in der Kälte die Lösungen gelieren und vor dem Druckvorgang wieder aufgetaut werden müssen. Die Vorratshaltung in größeren Tanks ist daher nur in geheizten Lagerhallen möglich; bei Lagerung im Freien muß rechtzeitige Vorsorge getroffen werden.

Versuche, die Gelierungstemperatur zu erniedrigen, führten zu Produkten mit verschlechterter Wasser- und Chemikalienbeständigkeit sowie einer Erniedrigung des Blockpunktes.

Im Lebensmittelsektor ist eine gute Beständigkeit gegen Wasser, verdünnte Säuren, Basen und Chemikalien überall dort gefordert, wo die bedruckten Güter bei Lagerung oder Gebrauch erhöhten Konzentrationen dieser Medien ausgesetzt sind, wie bei Tiefkühllagerung, beim Verpackungsvorgang und beim Transport.

Ein ausreichend hoher Blockpunkt ist erforderlich, um nach dem Druck auf der Substratoberfläche möglichst schnell eine physikalisch trockene Oberfläche zu erhalten, da andernfalls beim Aufrollen der Folie ein Abklatschen (Transfer der Druckfarbe auf die unbedruckte Folienrückseite) der Druckfarben erfolgen kann. Des weiteren würden bei ungenügend hohem Blockpunkt die übereinandergestapelten und gelagerten Verpackungen bereits bei leicht erhöhten Temperaturen verkleben.

Gute Gelierungsbeständigkeit weist eine Druckfarbe auf, wenn sie auch bei niedrigen Temperaturen noch ein einwandfreies Fließverhalten zeigt und homogen flüssig ist, das heißt keine Gelteilchen aufweist oder gar vollständig geliert ist.

Das Gelierungsverhalten und das Wiederauftauvermögen wird zwar mitbeeinflußt durch Art und Menge des Lösungsmittels bzw. des Lösungsmittelgemisches und der Konzentration der Lösung, in erster Linie wird es jedoch von dem jeweiligen Harz selbst geprägt.

Dem Versuch, die Gelierungsbeständigkeit in Richtung auf niedrigere Temperaturen zu verbessern, standen jedoch die Forderungen der Praxis nach hohen Blockpunkten und guter Chemikalienbeständigkeit gegenüber. Die Maßnahmen, welche zur Verbesserung einer der Eigenschaften erforderlich waren, waren dem Fachmann bekannt. Bekannt war ihm daher auch, daß diese Maßnahmen gegenläufige Effekte bei den jeweils anderen Eigenschaften hervorriefen und zu Kompromissen führten, welche den gestiegenen Anforderungen der Praxis nicht mehr gerecht wurden.

So werden in Chemical Abstracts, Vol 95, 1982, Nr. 26778w Druckfarbenbindemittel beschrieben, welche hergestellt werden aus dimeren Fettsäuren, monomeren Fettsäuren und kurzkettigen Monocarbonsäuren, Ethylendiamin und 1 : 1 Addukten aus Ethylendiamin und einem Monoepoxid (Glycidylmethylether). Aufgrund der hohen Monomeranteile sind diese Produkte zwar in iSO-Propanol löslich. Jedoch entsprechen weder ihre Wasser- oder Chemikalienbeständigkeit den auf dem Lebensmittelsektor geforderten Ansprüchen noch sind die Gelierungsbeständigkeit oder der Blockpunkt den gestiegenen Ansprüchen auf diesem Gebiet gewachsen.

Der Erfindung liegt die Aufgabe zugrunde, diese Nachteile zu überwinden und Polyamidharze zu finden, mit denen Druckfarben formuliert werden können, welche ein verbessertes Gelierungsverhalten und Wiederauftauvermögen zeigen und die daraus hergestellten Druckfilme gleichzeitig hohe Blockpunkte aufweisen.

Diese Aufgabe wird gelöst durch Polyamidharze aus dimeren Fettsäuren, monomeren Fettsäuren mit 16 bis 21 C-Atomen, vorzugsweise 18 C-Atomen, Ethylendiamin, und freie Aminogruppen enthaltenden

Addukten aus mindestens einem substituierten, gegebenenfalls Ethergruppen enthaltenden aliphatischen, cycloaliphatischen, alicyclischen oder araliphatischen zwei primäre Aminogruppen aufweisenden und mindestens einem cycloaliphatischen und/oder alicyclischen und/oder araliphatischen und Glycidylether.

Gegenstand der Erfindung sind daher Polyamidharze, erhältlich durch Reaktion von

1) 0.5 - 0,8 Äquivalenten dimerisierter Fettsäuren und
2) 0,2 - 0,5 Äquivalenten, mindestens einer Fettsäure mit 16 - 21 C-Atomen und
3) 0,6 - 0,9 Äquivalenten Ethylendiamin und
4) 0,1 - 0,4 Äquivalenten eines Adduktes aus mindestens einem Glycidylether und mindestens einem Diamin, wobei die Säuren gemäß 1) und 2) und die Aminkomponenten gemäß 3) und 4) in praktisch äquivalenten Mengen verwendet werden.

Ein weiterer Gegenstand der Erfindung ist die Verwendung der Druckfarben zum Bedrucken von organischen und/oder anorganischen Substraten im Tief- oder Flexodruckverfahren.

Die erfindungsgemäßen Polyamidharze werden vorzugsweise als Bindemittel zur Herstellung von Druckfarben für den Tief- und Flexodruck verwendet und verleihen den daraus hergestellten Harzlösungen neben der geforderten Resistenz gegenüber den auf dem Lebensmittelsektor üblicherweise vorhandenen Medien überraschenderweise auch eine ausgezeichnete Gelierungsbeständigkeit selbst bei Temperaturen unterhalb 0 °C, schnelles Wiederauftauvermögen bei Raumtemperatur, und gleichzeitig weisen die daraus hergestellten Druckfilme Blockpunkte auf, welche genauso hoch, zum Teil auch höher liegen als bei den bekannten Harzen.

Die zur Herstellung der erfindungsgemäßen Polyamidharze mitverwendeten dimeren Fettsäuren sind die handelsüblichen Produkte, welche durch Polymerisation von gesättigten oder ungesättigten einbasischen aliphatischen Fettsäuren mit 16 - 22 Kohlenstoffatomen nach bekannten Methoden hergestellt werden (vgl. US-PS 2 482 761, US-PS 3 256 304). Typische im Handel erhältliche dimere Fettsäuren haben etwa folgende Zusammensetzung:

| | |
|---|---|
| Monomere Säuren | 0 - 15 Gew.-% |
| dimere Säuren | 60 - 95 Gew.-% |
| tri- und höherpolymerisierte Säuren | 1 - 35 Gew.-% |

wobei der Gehalt je nach Herkunft der Monomeren, des Polymerisationsverfahren sowie des Aufbereitungsprozesses innerhalb dieser Grenzen schwanken kann.

Die erfindungsgemäß bevorzugten dimeren Fettsäuren weisen Gehalte (nach der GLC-Methode) auf von 0 - 10 Gew.-% monomere Fettsäure, 65 - 75 Gew.-% dimere Fettsäaure und 15 - 25 Gew.-% tri- und höherpolymerisierte Fettsäuren.

Zur Modifizierung wird mindestens eine monomere Fettsäure mitverwendet. Als monomere Fettsäure gelten erfindungsgemäß einbasische aliphatische Carbonsäuren mit 16 - 22 C-Atomen, welche gegebenenfalls substituiert sein können, und Mehrfachbindungen, insbesondere ein oder mehrere Doppelbindungen, enthalten können.

Erfindungsgemäß bevorzugt werden die natürlich vorkommenden Fettsäuremischungen, welche hauptsächlich $C_{18}$ und geringere Anteile $C_{16}$-Säuren aufweisen.

Das Verhältnis von Dicarbonsäuren zu Monocarbonsäuren liegt im Bereich von 0,5 - 0,8 bis zu 0,2 - 0,5 Äquivalenten, bezogen auf Gesamtcarboxylgruppen.

Die erfindungsgemäß zur Adduktbildung mitverwendeten Amine, welche allein oder in Mischung eingesetzt werden können, sind gegebenenfalls substituierte, ggf. Ethergruppen enthaltende aliphatische, cycloaliphatische, alicyclische oder araliphatische zwei primäre Aminogruppen aufweisende Verbindungen mit reaktiven Aminwasserstoffatomen. Reaktive Aminwasserstoffatome bedeutet, daß die Aminogruppen fähig sind, mit den erfindungsgemäß mitverwendeten Glycidylethern Addukte zu bilden.

Infrage kommende Amine sind insbesondere Ethylendiamin, Hexamethylendiamin 1,2-Propylendiamin, 2-Methyl-pentamethylendiamin-1,5, 2,2,4 (2,44) Trimethylhexamethylendiamin, Isophorondiamin, Diaminocyclohexane, Xylylendiamin, 1,12-Diamino-4,9-dioxa-dodekan.

Das Verhältnis der Amine Zu den Gesamtsäuremengen ist, bezogen auf reaktive Amin- und Carboxylgruppen, praktisch äquivalent, das heißt ca. 1 : 1.

Die Verwendung geringfügig überschüssiger Amin- oder Säuremengen ist zwar möglich und führt zu den dem Fachmann geläufigen Eigenschaftsveränderungen, wird erfindunasgemäß aber nicht bevorzugt.

Die erfindungsgemäß zur Adduktbildung mitverwendeten Glycidylether sind die bekannten flüssigen Verbindungen auf Basis von gegebenenfalls substituierten mehrwertigen Phenolen, cycloaliphatischen oder alicyclischen Alkoholen. Diese Verbindungen gehören zum bekannten Stand der Technik, und sind

beschrieben im Handbook of Epoxy Resins, Lee und Nevill, 1967, by Mc Graw-Hill, Inc; New York und können durch die allgemeine Formel (I) wiedergegeben werden:

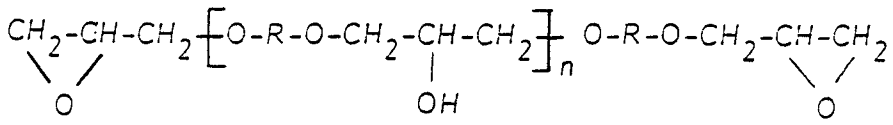

worin R = 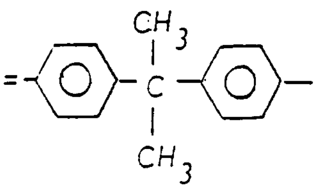 ; 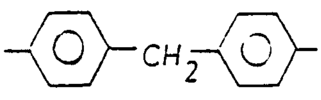 ; 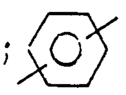

(Bisphenol A) (Bisphenol F)

oder

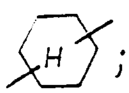 ; 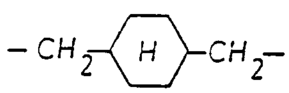 ; 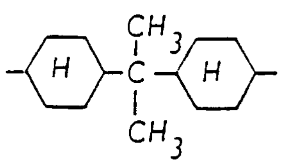 ;

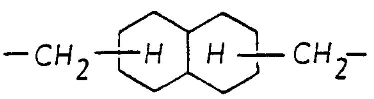 ;

bedeutet und n eine Zahl von 0 bis 2, vorzugsweise von 0 - 1, insbesondere zwischen 0 - 0,5 sein kann.

Der obere Wert von n wird je nach Struktur von R so gewählt, daß die Glycidylether flüssig sind und die fertigen Polyamidharze in den gegebenen Lösungsmitteln noch klar löslich sind. Spielt die Trübung keine ausschlaggebende Rolle für die Weiterverwendung des Polyamidharzes, wird n so gewählt, daß die Glycidylether noch flüssig und in den gewünschten Lösungsmitteln löslich sind. Durch einige orientierende Versuche innerhalb des Bereichs n = 0 - 2, sind die jeweils genauen Werte ohne weiteres zu ermitteln.

Erfindungsgemäß bevorzugt sind die flüssigen Glycidylether auf Basis von Bisphenol A (2,2-Bis)4-hydroxyphenyl)propan) und Bisphenol F (Bis(4-hydroxyphenyl)methan) mit n = 0 - 0,5 entsprechend Epoxidwerten von 0,41 - 0,56 und die flüssigen Glycidylether auf Basis von 1,4-Dihydroxymethylcyclohexan. Die Herstellung der Addukte erfolgt vorzugsweise so, daß pro Epoxidgruppe 10 Mol Amin vorgelegt werden und der Glycidylether zugetropft wird. Nach Beendigung der bei Raumtemperatur oder bei Temperaturen bis ca. 80 °C ablaufenden Reaktion wird der Überschuß des Amins im Vakuum abdestilliert.

Die so hergestellten isolierten Addukte können allein oder in Mischungen eingesetzt werden. Durch Einsatz von Amingemischen zur Adduktbildung ist die Herstellung von ebenfalls verwendbaren Mischaddukten möglich. Ein grundsätzlicher Unterschied zwischen Adduktmischungen und Mischaddukten besteht jedoch nicht. Die Menge der eingesetzten Addukte richtet sich nach der Höhe des gewünschten Erweichungspunktes, welcher größer als 90 °C sein sollte. In der Regel sind 0,1 - 0,4, insbesondere 0,2 - 0,3 Äquivalente, bezogen auf Gesamtaminäquivalente, ausreichend.

Die erfindungsgemäßen Polyamidharze sind herstellbar, indem die Säuren, das Ethylendiamin und das isolierte Addukt in praktisch äquivalenten Mengen bei Raumtemperatur in einem Dreihalskolben, ausgerüstet mit Rührer, Thermometer, Wasserabscheider und Rückflußkühler, in einer Stickstoffatmosphäre vorgelegt werden. Danach wird die Reaktion unter den für die Herstellung von Polyamidharzen bekannten Bedingungen durchgeführt. Erfindungsgemäß bevorzugt wird dabei so verfahren, daß innerhalb von 1 bis 2 Stunden auf die Reaktionstemperatur aufgeheizt, die Reaktion innerhalb von 1 - 2 Stunden bei dieser Temperatur durch kontinuierliches Abtrennen des Kondensats weitergeführt und durch Anlegen eines

Unterdrucks bei der gleichen Temperatur zu Ende geführt wird.

Die Reaktionstemperaturen liegen im Bereich von 160 - 280 °C, vorzugsweise 180 - 230 °C, und der Druck in der Schlußphase bei kleiner 1013 mbar, vorzugsweise kleiner 100 mbar, wobei der Bereich zwischen ca. 10 bis 30 mbar erfindungsgemäß besonders bevorzugt ist.

Während die Reaktionsbedingungen in der Regel wie oben angegeben beibehalten werden, kann die Vorgehensweise des Zusammengebens der Reaktionskomponenten variiert werden, ohne daß sich die Gelierungsbeständigkeit der Druckfarbe oder die physikalischen Eigenschaften des Druckfilms meßbar ändern.

In Abwandlung zum obigen Verfahren können daher auch alle Komponenten gleichzeitig vorgelegt oder separat einer Vorreaktion unterworfen werden, an welche sich dann die Folgereaktion mit der oder den anderen Komponenten anschließt.

In einem erfindungsgemäß bevorzugten Verfahren wird aus dem Glycidylether und einem Überschuß mindestens einer der Aminkomponenten ein Addukt hergestellt. Dieses Epoxid-Amin-Addukt, welches freie Aminogruppen aufweist, kann durch geeignete Maßnahmen von dem Aminüberschuß isoliert und Ethylendiamin und mit gegebenenfalls einer weiteren Aminkomponente der Kondensationsreaktion unterworfen werden.

Die erfindungsgemäßen Polyamidharze sind flexible Harze mit Ring- und Ball-Erweichungspunkten (gemessen nach DIN 52011) zwischen 90 - 110 °C, vorzugsweise 100 - 105 °C.

Sie sind löslich in Lösungsmittelgemischen aus kurzkettigen Alkoholen wie Ethanol, n-Propanol, iso-Propanol mit aliphatischen Kohlenwasserstoffen, welche einen Siedebereich von 60 bis 140 °C aufweisen, wie die Benzinfraktionen mit Siedebereichen von 80 - 110 °C und 100 - 140 °C und/oder aromatischen Kohlenwasserstoffen, insbesondere Toluol.

Unter Mitverwendung dieser Lösungsmittel werden nach dem bekannten Verfahren unter Mitverwendung von Pigmenten, Farbstoffen, Wachsen, Streck-, Benetzungs- und Verlaufsmitteln Druckfarben hergestellt, welche bei niedrigen Temperaturen gelierungsbeständig sind und deren Filme auf den entsprechenden Substraten aufgedruckt nach Abdunsten des Lösungsmittels Blockpunkte bis zu 90 °C aufweisen.

Ein weiterer Vorteil der erfindungsgemäßen Harze ist das schnelle Wiederauftauvermögen der daraus hergestellten und bei sehr niedrigen Temperaturen gelierten Druckfarben. Das schnelle Weiderauftauvermögen ist verbunden mit einer geringeren Energiezufuhr im Vergleich mit den handelsüblichen Druckfarben auf Basis von Polyamidharzen.

Als Substrate, die mit den erfindungsgemäß hergestellten Druckfarben bedruckt werden können, kommen die bekannten Materialien für Verpackungen - auch im Lebensmittelsektor - und Werbung in Betracht, wie Kunststoffolien aus Polyethylen, Polypropylen, Polyester, Papier, Kartonagen, Metallfolien, metallbeschichtete Papiere und Folien.

## Herstellung der isolierten Addukte

In einem mit Stickstoff gespülten 1 l Dreihalskolben, ausgerüstet mit Rührer, Thermometer und Rückflußkühler, werden in $N_2$-Atmosphäre 4 mol eines Amins vorgelegt und auf 60 °C erwärmt. Zu diesem Amin werden innerhalb von 90 min. 0,4 mol eines Glycidylethers auf Basis von Bisphenol A mit einem Epoxidwert von 0,54 zugetropft. Anschließend wird 120 min. bei 60 °C nachreagiert und dann das überschüssige Amin im Vakuum abdestilliert.

Nach diesem Verfahren wurden Addukte mit den folgenden Aminen hergestellt

| Addukt | Glycidylether | Amin | Aminzahl (mg KOH/g) |
|---|---|---|---|
| A | a | Ethylendiamin | 460 |
| B | a | 1,2-Diaminopropan | 401 |
| C | c | Isophorondiamin | 375 |
| D | a | 2-Methyl-pentamethylendiamin-1,5 | 331 |
| E | a | Hexamethylendiamin | 383 |
| F | d | Ethylendiamin | 639 |
| G | a | 2,2,4 (2,44)-Trimethylhexamethylendiamin | 325 |
| H | a | 1,2-Diaminocyclohexan | 292 |
| I | a | Xylylendiamin | 340 |
| K | a | 1,12-Diamino-4,9-dioxadokekan | 280 |
| L | b | Ethylendiamin | 370 |
| a = Glycidlether auf Basis von Bisphenol A; Epoxid-Wert 0,54 | | | |
| b = Glycidylether auf Basis von Bisphenol A; Epoxid-Wert 0,41 | | | |
| c = Glycidylethermischung auf Basis Bisphenol A und Bisphenol F im Verhältnis 80 : 20; Epoxidwert 0,53 | | | |
| d = Glycidylether auf Basis von 1,4-Dihydroxymethylcyclohexan; Epoxidwert: 0,78. | | | |

Herstellung der Harze

In einem mit Stickstoff gespülten 1 l Dreihalskolben, ausgerüstet mit Rührer, Thermometer und Destillationsaufsatz werden die Säurekomponenten vorgelegt, zweimal evakuiert und mit Stickstoff belüftet und anschließend Ethylendiamin und das Addukt zugegeben. Innerhalb von 2 Stunden wird auf 230 °C aufgeheizt. Bei dieser Temperatur wird 4 Stunden weiter kondensiert, wobei die letzten beiden Stunden ein Druck von 15 - 20 mbar angelegt wird.

Nach diesem Verfahren wurden die in der nachfolgenden Tabelle 1 aufgelisteten Harze hergestellt.

Die eingesetzten dimeren Fettsäuren hatten die folgende Zusammensetzung:

| | I | II |
|---|---|---|
| monomere Fettsäure | 0,57 % | 2,47 % |
| dimere Fettsäure | 82,57 % | 93,31 % |
| tri- u. höherpolymerisierte Fettsäuren | 16,87 % | 4,23 % |

Die mitverwendete monomere Fettsäure ist eine handelsübliche Tallölfettsäure.

In der nachfolgenden Tabelle 1 bedeuten:

1 = dimerisierte Fettsäure
2 = monomere Fettsäure
3 = Ethylendiamin
4 = Viskosität gemessen mit einem Platte-Kegel-Viskosimeter der Fa. Haake; Messung erfolgte entsprechend den Angaben des Herstellers
5 = kein Addukt; Glycidylether a zusammen mit den anderen Komponenten vorgelegt

6 = Isophorondiamin

Tabelle 1

| Beispiel | Äquivalente: dimere FS[1] | monom. FS[2] | EDA[3] | Addukt | Analytische Daten: Aminzahl mg KOH/g | Säurezahl mg KOH/g | Erweichungssp. DIN 52001 | Viskosität[4] 165 °C Pa.s |
|---|---|---|---|---|---|---|---|---|
| 1 | I 0,80 | 0,20 | 0,8 | B 0,2 | 15,3 | 6,1 | 98 °C | 1,65 |
| 2 | I 0,74 | 0,26 | 0,8 | C 0,2 | 7,9 | 6,1 | 97 °C | 1,37 |
| 3 | I 0,65 | 0,35 | 0,8 | D 0,2 | 10,5 | 3,1 | 100 °C | 0,90 |
| 4 | I 0,65 | 0,35 | 0,8 | E 0,2 | 5,9 | 2,7 | 100 °C | 1,04 |
| 5 | I 0,70 | 0,30 | 1,0 | a[5] | 12,5 | 2,8 | 102 °C | 0,91 |
| 6 | I 0,73 | 0,27 | 0,8 | F 0,2 | 5,8 | 5,5 | 100 °C | 0,90 |
| 7 | I 0,68 | 0,32 | 0,8 | G 0,2 | 7,0 | 2,0 | 101 °C | 1,50 |
| 8 | I 0,69 | 0,31 | 0,8 | A 0,2 | 9,2 | 2,6 | 101 °C | 1,11 |
| 9 | II 0,60 | 0,40 | 0,7 | A 0,3 | 11,3 | 2,9 | 98 °C | 0,74 |
| 10 | I 0,52 | 0,48 | 0,6 | A 0,4 | 14,0 | 4.0 | 92 °C | 0,51 |
| 11 | I 0,79 | 0,21 | 0,8 | L 0,2 | 9,5 | 4,0 | 101 °C | 2,89 |
| 12 | I 0,82 | 0,18 | 0,9 | A 0,1 | 9,2 | 3,9 | 102 °C | 2,14 |
| 13 | I 0,75 | 0,25 | 0,8 | H 0,2 | 14,4 | 4,4 | 99 °C | 1,22 |
| 14 | I 0,65 | 0,35 | 0,8 | I 0,2 | 9,0 | 4,1 | 99 °C | 1,27 |
| 15 | I 0,68 | 0,32 | 0,8 | K 0,2 | 9,6 | 4,2 | 102 °C | 1,7 |
| Vergleichsbeispiele | | | | | | | | |
| 16 | 0,73 | 0,27 | 1,0 | - | 7,0 | 6,5 | 110 °C | 2,10 |
| 17 | 0,80 | 0,20 | EDA 0,85<br>IPD[6] 0,15 | - | 6,0 | 6,0 | 105 °C | 1,40 |

Sämtliche der in der Tabelle 1 aufgeführten erfindungsgemäßen Polyamidharze wurden anschließend, wie nachfolgend beschrieben, behandelt und geprüft.

## Prüfung der Harzfirnisse

1) Gelierungsbeständigkeit

30 % Harz enthaltende Lösungen in Äthanol/Benzin 80/110 = 1 : 1 werden, beginnend bei 20 °C, stufenweise nach 24 Std. Lagerung um jeweils 5 °C abgekühlt.

Beurteilungskriterium sind a) die Temperatur, bei der die Lösungen gelieren und b) ob sie bei Raumtemperatur wieder auftauen (s. Tabelle 2).

2) Einfrier-/Auftauverhalten

50 g 30 % Harz enthaltende Lösungen in Äthanol/Benzin 80/110 = 1 : 1 werden in einem 100er Erlenmeyer-Kolben ca. 16 Std. bei -28 °C in einem Kühlschrank gelagert.

Nach dieser Lagerzeit werden die Kolben mit den inzwischen gelierten Lösungen entnommen und bei Raumtemperatur das Auftauverhalten beobachtet. Beurteilt wird

a) die Zeit, bis zum Auftaubeginn der Lösungen am Rande des Kolbens und

b) die Zeit, bis die gelierten Lösungen völlig aufgetaut sind (s. Tabelle 3)

Herstellung der Druckfarben und Druckfilme

30 g Polyamidharz werden in 70 g Äthanol/Benzin 80/110 = 1 : 1 unter Rühren in einem 500er Erlenmeyerkolben gelöst. Dann wird die Lösung in den Mahlbecher einer Kugelmühle gegeben und 10 g eines organischen Rotpigments hinzugefügt. Nach 20 min. Dispergierzeit wird die Farbe in den vorher verwendeten Erlenmeyerkolben zurückgegeben und mit Äthanol/Benzin 80/110 = 1 : 1 auf Druckviskosität verdünnt (20 - 22 sec. Auslaufzeit im DIN 4 Becher).

Die so erhaltenen fertigen Druckfarben werden anschließend mit einer handelsüblichen Labordruckmaschine von Rolle auf Rolle sowohl auf Polyäthylen- als auch auf unlackierte Zellglasfolie gedruckt. Nach 2 Tagen Lagerzeit bei Raumtemperatur werden die Drucke den nachfolgend beschriebenen Tests unterworfen.

## Prüfung der Druckfilme

3) Blockpunkt

Abschnitte der gelagerten, auf unlackiertes Zellglas aufgetragenen Drucke werden gegeneinandergefaltet und zwischen plan geschliffene Glasplatten gelegt. Diese werden dann unter einer Belastung von 60 $g/cm^2$ bei täglich um 10 °C erhöhten Temperaturen in einem Trockenschrank gelagert.

Beurteilungskriterium ist die Temperatur, bei der die Filme nach dem Auseinanderfalten erste ganz leichte Beschädigungen aufweisen (siehe Tabelle 4).

Tabelle 2

| Nr. | Nr. Tabelle 1 | Gelierungstemperatur °C | Taut bei RT wieder auf |
|---|---|---|---|
| 1 | 1 | -5 | ja |
| 2 | 2 | -5 | ja |
| 3 | 3 | -5 | ja |
| 4 | 4 | -5 | ja |
| 5 | 5 | -5 | ja |
| 6 | 6 | -5 | ja |
| 7 | 7 | -5 | ja |
| 8 | 8 | -5 | ja |
| 9 | 9 | -10 | ja |
| 10 | 10 | -10 | ja |
| 11 | 11 | -5 | ja |
| 12 | 12 | ±0 | ja |
| 13 | 13 | -5 | ja |
| 14 | 15 | -5 | ja |
| 15 | 15 | -5 | ja |
| A | A | 0 - 5 | ja |
| B | B | 5 - 10 | ja |

Tabelle 3

| Nr. | Nr. Tabelle 1 | Auftaubeginn (min.) | völlig aufgetaut (min.) |
|---|---|---|---|
| 1 | 1 | 15 | 27 |
| 2 | 2 | 15 | 27 |
| 3 | 3 | 17 | 29 |
| 4 | 4 | 17 | 30 |
| 5 | 5 | 17 | 30 |
| 6 | 6 | 19 | 33 |
| 7 | 7 | 18 | 34 |
| 8 | 8 | 15 | 30 |
| 9 | 9 | 14 | 27 |
| 10 | 10 | 12 | 25 |
| 11 | 11 | 12 | 26 |
| 12 | 12 | 16 | 30 |
| 13 | 13 | 15 | 28 |
| 14 | 14 | 16 | 29 |
| 15 | 15 | 17 | 30 |
| A | A | 25 | 40 |
| B | B | 35 | 55 |

Tabelle 4

| Nr. | Nr. Tabelle 1 | Blockpunkt °C |
|---|---|---|
| 1 | 1 | 90 |
| 2 | 2 | 80 |
| 3 | 3 | 80 |
| 4 | 4 | 80 |
| 5 | 5 | 80 |
| 6 | 6 | 90 |
| 7 | 7 | 90 |
| 8 | 8 | 90 |
| 9 | 9 | 70 - 80 |
| 10 | 10 | 70 |
| 11 | 11 | 90 |
| 12 | 12 | 80 - 90 |
| 13 | 13 | 80 |
| 14 | 14 | 90 |
| 15 | 15 | 80 |
| A | A | 80 |
| B | B | 90 |

**Patentansprüche**
**Patentansprüche für folgende Vertragsstaaten : DE, GB, FR, IT**

**1.** Polyamidharze, erhältlich durch Reaktion von
1) 0,5 - 0,8 Äquivalenten dimerisierter Fettsäuren und
2) 0,2 - 0,5 Äquivalenten mindestens einer monomeren Fettsäure mit 16 - 22 C-Atomen und
3) 0,6 - 0,9 Äquivalenten Ethylendiamin und
4) 0.1 - 0,4 Äquivalenten mindestens eines freie Aminogruppen enthaltenden Adduktes aus
a) mindestens einem gegebenenfalls Ethergruppen enthaltenden aliphatischen, cycloaliphatischen, alicyclischen oder araliphatischen zwei primäre Aminogruppen aufweisenden Diamin und
b) mindestens einem cycloaliphatischen und/oder alicyclischen und/oder araliphatischen Glycidylether.

**2.** Verfahren zur Herstellung der Polyamidharze gemäß Anspruch 1, dadurch gekennzeichnet, daß in erster Stufe aus dem Glycidylether und einem Überschuß eines Amins ein Addukt hergestellt wird, welches in zweiter Stufe mit den Säuren und Ethylendiamin bei Temperaturen von 160 - 280 °C aufgeheizt und das gebildete Kondensat kontinuierlich entfernt wird, wobei die Reaktion gegebenenfalls bei Drucken kleiner 1013 mbar vervollständigt wird.

**3.** Verfahren zur Herstellung von Druckfarben aus Bindemitteln auf Basis von Polyamidharzen, Lösungsmitteln, Farbstoffen, Pigmenten und gegebenenfalls üblichen Zusatzstoffen, dadurch gekennzeichnet, daß als Bindemittel Polyamidharze gemäß Anspruch 1 mitverwendet werden, wobei die Säuren gemäß 1 und 2 und die Diaminkomponenten gemäß 3) und 4) in praktisch äquivalenten Mengen verwendet werden.

4. Verwendung der Druckfarben gemäß Anspruch 3 zum Bedrucken von organischen und/oder anorganischen Substraten im Tief- oder Flexodruckverfahren.

**Patentansprüche für folgende Vertragsstaaten : ES, GR**

1. Verfahren zur Herstellung von Polyamidharzen, dadurch gekennzeichnet, daß
   1) 0,5 - 0,8 Äquivalenten dimerisierter Fettsäuren und
   2) 0,2 - 0,5 Äquivalenten mindestens einer monomeren Fettsäure mit 16 - 22 C-Atomen und
   3) 0,6 - 0,9 Äquivalenten Ethylendiamin und
   4) 0,1 - 0,4 Äquivalenten mindestens eines freie Aminogruppen enthaltenden Adduktes aus
      a) mindestens einem gegebenenfalls Ethergruppen enthaltenden aliphatischen, cycloaliphatischen, alicyclischen oder araliphatischen zwei primäre Aminogruppen aufweisenden Diamin und
      b) mindestens einem cycloaliphatischen und/oder alicyclischen und/oder araliphatischen Glycidylether

   bei Raumtemperatur zusammengegeben und unter gutem Rühren auf Temperaturen von 160 - 280 °C aufgeheizt und das gebildete Kondensat kontinuierlich entfernt wird, wobei die Reaktion gegebenenfalls bei Drücken kleiner 1013 mbar vervollständigt wird.

2. Verfahren zur Herstellung der Polyamidharze gemäß Anspruch 1, dadurch gekennzeichnet, daß in erster Stufe aus dem Glycidylether und einem Überschuß eines Amins ein Addukt hergestellt wird, welches in zweiter Stufe mit den Säuren und Ethylendiamin bei Temperaturen von 160 - 280 °C aufgeheizt und das gebildete Kondensat kontinuierlich entfernt wird, wobei die Reaktion gegebenenfalls bei Drucken kleiner 1013 mbar vervollständigt wird.

3. Verfahren zur Herstellung von Druckfarben aus Bindemitteln auf Basis von Polyamidharzen, Lösungsmitteln, Farbstoffen, Pigmenten und gegebenenfalls üblichen Zusatzstoffen, dadurch gekennzeichnet, daß als Bindemittel Polyamidharze gemäß Anspruch 1, wobei die Säuren gemäß 1 und 2 und die Diaminkomponenten gemäß 3) und 4) in praktisch äquivalenten Mengen verwendet werden.

4. Verwendung der Druckfarben gemäß Anspruch 3 zum Bedrucken von organischen und/oder anorganischen Substraten im Tief- oder Flexodruckverfahren.

**Claims**
**Claims for the following Contracting States : DE, GB, FR, IT**

1. Polyamide resins, obtainable by reacting
   1) from 0.5 to 0.8 equivalents of dimerised fatty acid and
   2) from 0.2 to 0.5 equivalents of at least one monomeric fatty acid having from 16 to 22 carbon atoms, and
   3) from 0.6 to 0.9 equivalents of ethylenediamine and
   4) from 0.1 to 0.4 equivalents of at least one adduct, containing free amino groups, of
      a) at least one aliphatic, cycloaliphatic, alicyclic or araliphatic diamine containing two primary amino groups and optionally containing ether groups and
      b) at least one cycloaliphatic and/or alicyclic and/or araliphatic glycidyl ether.

2. A process for the preparation of the polyamide resins according to claim 1, characterised in that in a first step an adduct is produced from the glycidyl ether and an excess of an amine and, in a second step, the adduct is heated with the acids and ethylene diamine at temperatures of from 160 to 280 °C and the condensate formed is continuously removed, the reaction optionally being completed at pressures of less than 1013 mbar.

3. A process for the production of printing dyes from binders based on polyamide resins, solvents, dyes, pigments and optionally customary additives, characterised in that the binders used are polyamide resins according to claim 1, the acids according to 1 and 2 and the diamine components according to 3) and 4) being used in practically equivalent amounts.

4. The use of the printing dyes according to claim 3 for printing organic and/or inorganic substrates in rotogravure or flexographic printing methods.

**Claims for the following Contracting States : ES, GR**

**1.** A process for the preparation of polyamide resins, characterised in that
1) from 0.5 to 0.8 equivalents of dimerised fatty acid and
2) from 0.2 to 0.5 equivalents of at least one monomeric fatty acid having from 16 to 22 carbon atoms, and
3) from 0.6 to 0.9 equivalents of ethylenediamine and
4) from 0.1 to 0.4 equivalents of at least one adduct, containing free amino groups, of
a) at least one aliphatic, cycloaliphatic, alicyclic or araliphatic diamine containing two primary amino groups and optionally containing ether groups and
b) at least one cycloaliphatic and/or alicyclic and/or araliphatic glycidyl ether
are incorporated together at room temperature and, while stirring well, heated to temperatures of from 160 to 280 °C and the condensate formed is continuously removed, the reaction optionally being completed at pressures of less than 1013 mbar.

**2.** A process for the preparation of polyamide resins according to claim 1, characterised in that in a first step an adduct is produced from the glycidyl ether and an excess of an amine and, in a second step, the adduct is heated with the acids and ethylene diamine at temperatures of from 160 to 280 °C and the condensate formed is continuously removed, the reaction optionally being completed at pressures of less than 1013 mbar.

**3.** A process for the preparation of printing dyes from binders based on polyamide resins, solvents, dyes, pigments and optionally customary additives, characterised in that the binders used are polyamide resins according to claim 1, the acids according to 1 and 2 and the diamine components according to 3) and 4) being used in practically equivalent amounts.

**4.** The use of the printing dyes according to claim 3 for printing organic and/or inorganic substrates in rotogravure or flexographic printing methods.

**Revendications**
**Revendications pour les Etats contractants suivants : DE, GB, FR, IT**

**1.** Résines de polyamide que l'on peut obtenir par la réaction
1) de 0,5 à 0,8 équivalent d'acides gras dimérisés, et
2) de 0,2 à 0,5 équivalent d'au moins un acide gras monomère ayant de 16 à 21 atomes de carbone, et
3) de 0,6 à 0,9 équivalent d'éthylènediamine, et
4) de 0,1 à 4 équivalents d'au moins un produit d'addition contenant des groupes amino libres, constitué
a) d'au moins une diamine contenant éventuellement des groupes éthers, aliphatiques, cycloaliphatiques, alicycliques ou aralyphatiques, comportant deux groupes amino primaires, et
b) d'au moins un éther glycidylique cycloaliphatique et/ou alicyclique et/ou araliphatique.

**2.** Procédé pour la préparation les résines de polyamine selon la revendication 1, caractérisé en ce que, dans une première étape, on prépare, à partir de l'éther glycidylique et d'un excès d'une amine, un produit d'addition qui, dans une deuxième étape, est chauffé avec les acides et l'éthylènediamine à des températures de 160 à 280 °C, le produit de condensation formé étant éliminé en continu, la réaction étant éventuellement parachevée à des pressions inférieures à 1013 mbar.

**3.** Procédé pour la préparation d'encres d'impression à partir de liants à base de résines de polyamide, de solvants, de colorants, de pigments et éventuellement d'additifs supplémentaires, caractérisé en ce qu'on, utilise, comme liants, des résines de polyamide selon la revendication 1, les acides selon 1 et 2 et les composants diamine selon 3) et 4) étant utilisés en des quantités pratiquement équivalentes.

**4.** Utilisation des encres d'imprimerie selon la revendication 3, pour imprimer des substrats organiques et/ou minéraux en héliogravure ou en flexographie.

**Revendications pour les Etats contractants suivants : ES, GR**

1. Procédé pour la préparation de résines de polyamide caractérisé en ce qu'on réunit à la température ambiante
   1) de 0,5 à 0,8 équivalent d'acides gras dimérisés, et
   2) de 0,2 à 0,5 équivalent d'au moins un acide gras monomère ayant de 16 à 21 atomes de carbone, et
   3) de 0,6 à 0,9 équivalent d'éthylènediamine, et
   4) de 0,1 à 4 équivalents d'au moins un produit d'addition contenant des groupes amino libres, constitué
      a) d'au moins une diamine contenant éventuellement des groupes éthers, aliphatiques, cycloaliphatiques, alicycliques ou aralyphatiques, comportant deux groupes amino primaires, et
      b) d'au moins un éther glycidylique cycloaliphatique et/ou alicyclique et/ou araliphatique.

   et en ce que, sous bonne agitation, on les chauffe à des températures de 160 à 280 °C, le condensat formé étant éliminé en continu, la réaction étant éventuellement parachevée sous des pressions inférieures à 1013 mbar.

2. Procédé pour la préparation les résines de polyamine selon la revendication 1, caractérisé en ce que, dans une première étape, on prépare, à partir de l'éther glycidylique et d'un excès d'une amine, un produit d'addition qui, dans une deuxième étape, est chauffé avec les acides et l'éthylènediamine à des températures de 160 à 280 °C, le produit de condensation formé étant éliminé en continu, la réaction étant éventuellement parachevée à des pressions inférieures à 1013 mbar.

3. Procédé pour la préparation d'encres d'impression à partir de liants à base de résines de polyamide, de solvants, de colorants, de pigments et éventuellement d'additifs supplémentaires, caractérisé en ce qu'on, utilise, comme liants, des résines de polyamide selon la revendication 1, les acides selon 1 et 2 et les composants diamine selon 3) et 4) étant utilisés en des quantités pratiquement équivalentes.

4. Utilisation des encres d'imprimerie selon la revendication 3, pour imprimer des substrats organiques et/ou minéraux en héliogravure ou en flexographie.